# EUROPEAN PATENT SPECIFICATION

(11) **EP 3 742 548 B1**
(45) Date of publication and mention of the grant of the patent: **06.04.2022**
(21) Application number: 20175988.3
(22) Date of filing: 22.05.2020
(51) Int. Cl.: H01Q 1/24, H01Q 21/24, H01Q 21/28, H01Q 1/52

(54) **COMMUNICATION DEVICE**
KOMMUNIKATIONSVORRICHTUNG
DISPOSITIF DE COMMUNICATION

(30) Priority: 23.05.2019 US 201962851674 P
(43) Date of publication of application: 25.11.2020
(73) Proprietor: HTC Corporation, Taoyuan City 330, (TW)
(72) Inventor: Lin, Cheng Hung, 330 Taoyuan City (TW); Wang, Szu Po, 330 Taoyuan City (TW); Wang, Chun Chieh, 330 Taoyuan City (TW); Chen, Yu Yu, 330 Taoyuan City (TW); Wu, Shih Hua, 330 Taoyuan City (TW); Cheng, Dun Yuan, 330 Taoyuan City (TW)
(74) Representative: Murgitroyd & Company

(56) References cited:
- WO-A1-2018/168139
- CN-A- 109 256 613
- TW-A- 201 807 881
- US-A1- 2012 009 884
- US-A1- 2012 182 190
- US-A1- 2018 151 947
- US-A1- 2018 205 146

## Description

### BACKGROUND OF THE INVENTION

### Field of the Invention

The disclosure generally relates to a communication device, and more particularly, to a communication device with multiple polarization directions.

### Description of the Related Art

With the advancements being made in mobile communication technology, mobile devices such as portable computers, mobile phones, multimedia players, and other hybrid functional portable electronic devices have become more common. To satisfy user demand, mobile devices can usually perform wireless communication functions. Some devices cover a large wireless communication area; these include mobile phones using 2G, 3G, and LTE (Long Term Evolution) systems and using frequency bands of 700MHz, 850MHz, 900MHz, 1800MHz, 1900MHz, 2100MHz, 2300MHz, and 2500MHz. Some devices cover a small wireless communication area; these include mobile phones using Wi-Fi and Bluetooth systems and using frequency bands of 2.4GHz, 5.2GHz, and 5.8GHz. US2018/151947, US2012/182190, US2018/205146, TW201807881A, CN109256613, and US2012/009884 may be useful for understanding the related art.

Wireless access points are indispensable elements that allow mobile devices in a room to connect to the Internet at high speeds. However, since indoor environments have serious problems with signal reflection and multipath fading, wireless access points should process signals from a variety of transmission directions simultaneously. Accordingly, it has become a critical challenge for current designers to design a high-isolation communication device with multiple polarization directions in the limited space of a wireless access point.

### BRIEF SUMMARY OF THE INVENTION

It is an object of the present invention to provide a communication device. This object can be achieved by the features as defined by claim 1. Further enhancements are characterized by the dependent claims.

In a preferred embodiment, the invention proposes a communication device that includes a display device, a first antenna element, a second antenna element, a third antenna element, and a fourth antenna element. The display device is surrounded by the first antenna element, the second antenna element, the third antenna element, and the fourth antenna element. Any adjacent two of the first antenna element, the second antenna element, the third antenna element, and the fourth antenna element have different polarization directions.

The communication device further includes a housing. The display device is embedded in the housing.

The housing is made of a nonconductive material.

In some embodiments, the first antenna element, the second antenna element, the third antenna element, and the fourth antenna element adhere to the housing.

The first antenna element is adjacent to a right side of the housing, the second antenna element is adjacent to a bottom side of housing, the third antenna element is adjacent to a left side of the housing, and the fourth antenna element is adjacent to a top side of the housing.

In some embodiments, the first antenna element, the second antenna element, the third antenna element, and the fourth antenna element are linearly-polarized.

In some embodiments, a first polarization direction of the first antenna element is substantially z̅, a second polarization direction of the second antenna element is substantially y̅, a third polarization direction of the third antenna element is substantially -z̅, and a fourth polarization direction of the fourth antenna element is substantially -y̅.

In some embodiments, the first antenna element and the third antenna element are linearly-polarized, and the second antenna element and the fourth antenna element are circularly-polarized.

In some embodiments, a first polarization direction of the first antenna element is substantially z̅, a second polarization direction of the second antenna element is substantially RHCP (Right Hand Circular Polarization), a third polarization direction of the third antenna element is substantially -z̅, and a fourth polarization direction of the fourth antenna element is substantially LHCP (Left Hand Circular Polarization).

In some embodiments, the first antenna element and the third antenna element are circularly-polarized, and the second antenna element and the fourth antenna element are linearly-polarized.

In some embodiments, a first polarization direction of the first antenna element is substantially RHCP, a second polarization direction of the second antenna element is substantially y̅, a third polarization direction of the third antenna element is substantially LHCP, and a fourth polarization direction of the fourth antenna element is substantially -y̅.

The communication device further includes a fifth antenna element, a sixth antenna element, a seventh antenna element, and an eighth antenna element. The display device is surrounded by the first antenna element, the second antenna element, the third antenna element, the fourth antenna element, the fifth antenna element, the sixth antenna element, the seventh antenna element, and the eighth antenna element. Any adjacent two of the first antenna element, the second antenna element, the third antenna element, the fourth antenna element, the fifth antenna element, the sixth antenna element, the seventh antenna element, and the eighth antenna element have different polarization directions.

In some embodiments, a combination of the first antenna element, the second antenna element, the third antenna element, the fourth antenna element, the fifth antenna element, the sixth antenna element, the seventh antenna element, and the eighth antenna element substantially has a second closed-loop shape.

In some embodiments, the fifth antenna element, the sixth antenna element, the seventh antenna element, and the eighth antenna element adhere to the housing.

The fifth antenna element is adjacent to a bottom right corner of the housing, the sixth antenna element is adjacent to a bottom left corner of housing, the seventh antenna element is adjacent to a top left corner of the housing, and the eighth antenna element is adjacent to a top right corner of the housing.

In some embodiments, the first antenna element, the second antenna element, the third antenna element, the fourth antenna element, the fifth antenna element, the sixth antenna element, the seventh antenna element, and the eighth antenna element are linearly-polarized.

In some embodiments, a first polarization direction of the first antenna element is substantially z̅, a second polarization direction of the second antenna element is substantially y̅, a third polarization direction of the third antenna element is substantially -z̅, and a fourth polarization direction of the fourth antenna element is substantially -y̅, a fifth polarization direction of the fifth antenna element is substantially -y̅ - z̅, a sixth polarization direction of the sixth antenna element is substantially -y̅ + z̅, a seventh polarization direction of the seventh antenna element is substantially y̅ + z̅, and an eighth polarization direction of the eighth antenna element is substantially y̅ - z̅.

In some embodiments, the first antenna element, the second antenna element, the third antenna element, the fourth antenna element, the seventh antenna element, and the eighth antenna element are linearly-polarized, and the fifth antenna element and the sixth antenna element are circularly-polarized.

In some embodiments, a first polarization direction of the first antenna element is substantially z̅, a second polarization direction of the second antenna element is substantially y̅, a third polarization direction of the third antenna element is substantially -z̅, and a fourth polarization direction of the fourth antenna element is substantially -y̅, a fifth polarization direction of the fifth antenna element is substantially RHCP, a sixth polarization direction of the sixth antenna element is substantially LHCP, a seventh polarization direction of the seventh antenna element is substantially y̅ + z̅, and an eighth polarization direction of the eighth antenna element is substantially y̅ - z̅.

### BRIEF DESCRIPTION OF DRAWINGS

The invention can be more fully understood by reading the subsequent detailed description and examples with references made to the accompanying drawings, wherein:
FIG. 1 is a front view of a communication device according to an embodiment of the invention;
FIG. 2 is a right view of a communication device according to an embodiment of the invention;
FIG. 3 is a left view of a communication device according to an embodiment of the invention;
FIG. 4 is a top view of a communication device according to an embodiment of the invention;
FIG. 5 is a bottom view of a communication device according to an embodiment of the invention;
FIG. 6 is a front view of a communication device according to an embodiment of the invention;
FIG. 7 is a right view of a communication device according to an embodiment of the invention;
FIG. 8 is a left view of a communication device according to an embodiment of the invention;
FIG. 9 is a top view of a communication device according to an embodiment of the invention; and
FIG. 10 is a bottom view of a communication device according to an embodiment of the invention.

### DETAILED DESCRIPTION OF THE INVENTION

In order to illustrate the foregoing and other purposes, features and advantages of the invention, the embodiments and figures of the invention will be described in detail as follows.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an openended fashion, and thus should be interpreted to mean "include, but not limited to...". The term "substantially" means the value is within an acceptable error range. One skilled in the art can solve the technical problem within a predetermined error range and achieve the proposed technical performance. Also, the term "couple" is intended to mean either an indirect or direct electrical connection. Accordingly, if one device is coupled to another device, that connection may be through a direct electrical connection, or through an indirect electrical connection via other devices and connections.

The following disclosure provides many different embodiments, or examples, for implementing different features of the subject matter provided. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

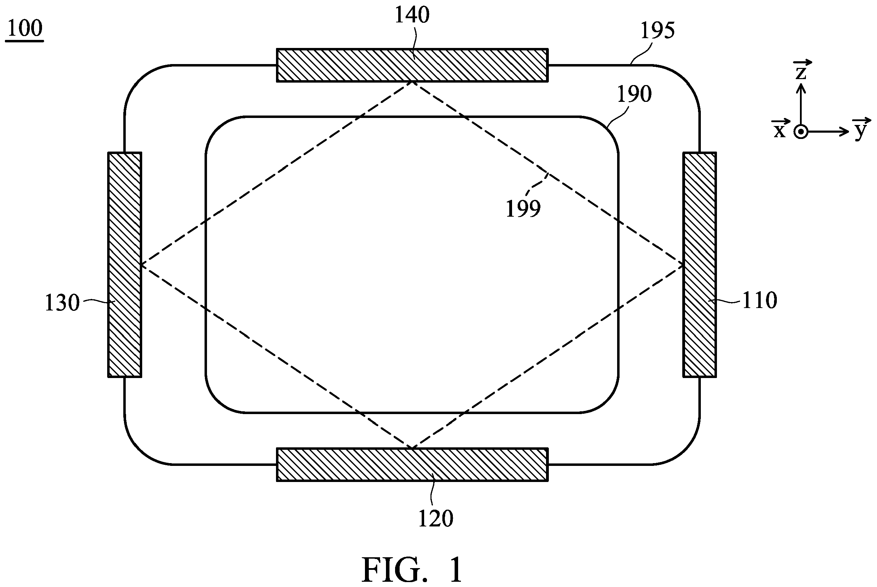

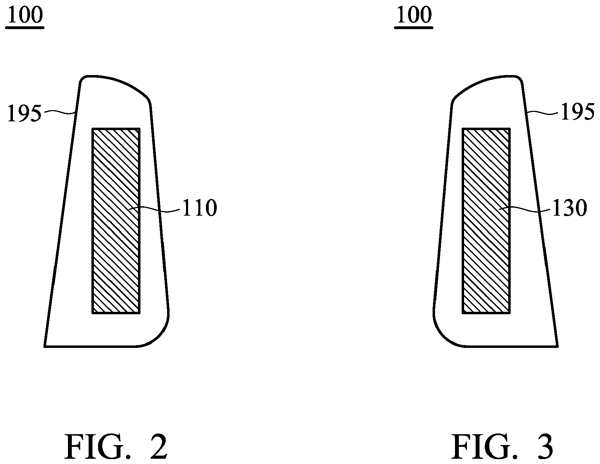

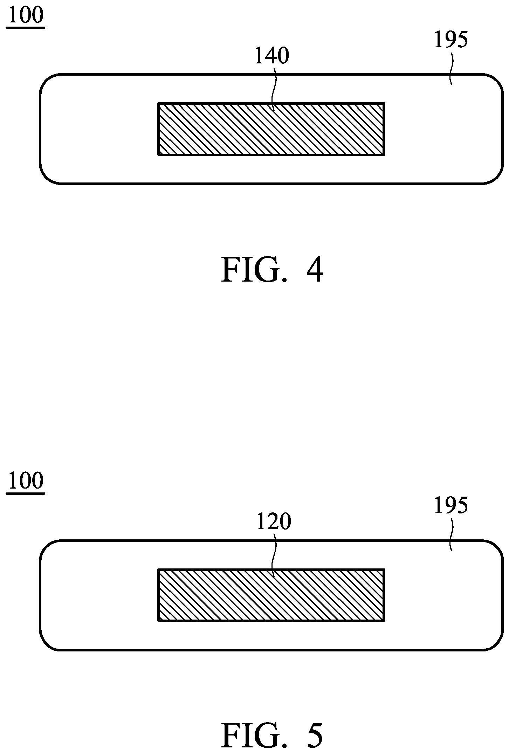

FIG. 1 is a front view of a communication device 100 according to an embodiment of the invention. FIG. 2 is a right view of the communication device 100 according to an embodiment of the invention. FIG. 3 is a left view of the communication device 100 according to an embodiment of the invention. FIG. 4 is a top view of the communication device 100 according to an embodiment of the invention. FIG. 5 is a bottom view of the communication device 100 according to an embodiment of the invention. Please refer to FIGS. 1-5 together. For example, the communication device 100 may be implemented with a wireless access point, but it is not limited thereto. As shown in FIGS. 1-5, the communication device 100 at least includes a first antenna element 110, a second antenna element 120, a third antenna element 130, a fourth antenna element 140, and a display device 190. It should be understood that the communication device 100 may further include other components, such as a speaker, a touch control module, and/or a power supply module, although they are not displayed in FIGS. 1-5.

The shapes and types of the first antenna element 110, the second antenna element 120, the third antenna element 130, and the fourth antenna element 140 are not limited in the invention. For example, any of the first antenna element 110, the second antenna element 120, the third antenna element 130, and the fourth antenna element 140 may be a monopole antenna, a dipole antenna, a loop antenna, a patch antenna, a helical antenna, a PIFA (Planar Inverted F Antenna), or a chip antenna. Furthermore, the first antenna element 110, the second antenna element 120, the third antenna element 130, and the fourth antenna element 140 can cover and/or operate in the same frequency band, for example, from 300MHz to 10GHz.

The display device 190 is surrounded by the first antenna element 110, the second antenna element 120, the third antenna element 130, and the fourth antenna element 140. In some embodiments, a combination of the first antenna element 110, the second antenna element 120, the third antenna element 130, and the fourth antenna element 140 substantially has a first closed-loop shape 199. For example, the first closed-loop shape 199 may be substantially a diamond shape, a rectangular shape, or a square shape, but it is not limited thereto.

In some embodiments, the communication device 100 further includes a housing 195, which is made of a nonconductive material. The display device 190 may be embedded in the center of the housing 195. The first antenna element 110, the second antenna element 120, the third antenna element 130, and the fourth antenna element 140 may all adhere to the housing 195. For example, the first antenna element 110, the second antenna element 120, the third antenna element 130, and the fourth antenna element 140 may all be disposed inside the housing 195. Alternatively, the first antenna element 110, the second antenna element 120, the third antenna element 130, and the fourth antenna element 140 may all be disposed outside the housing 195. The two designs can provide similar performance.

In some embodiments, the first antenna element 110 is adjacent to the right side of the housing 195, the second antenna element 120 is adjacent to the bottom side of housing 195, the third antenna element 130 is adjacent to the left side of the housing 195, and the fourth antenna element 140 is adjacent to the top side of the housing 195. It should be noted that the term "adjacent" or "close" over the disclosure means that the distance (spacing) between two corresponding elements is smaller than a predetermined distance (e.g., 5mm or shorter), or means that the two corresponding elements directly touch each other (i.e., the aforementioned distance/spacing therebetween is reduced to 0).

In some embodiments, the first antenna element 110, the second antenna element 120, the third antenna element 130, and the fourth antenna element 140 are all linearly-polarized. Specifically, a first polarization direction of the first antenna element 110 may be substantially z̅, a second polarization direction of the second antenna element 120 may be substantially y̅, a third polarization direction of the third antenna element 130 may be substantially -z̅, and a fourth polarization direction of the fourth antenna element 140 may be substantially -y̅. Thus, any two adjacent antenna elements have orthogonal polarization directions, and the interference between them is suppressed.

In some embodiments, the first antenna element 110 and the third antenna element 130 are both linearly-polarized, and the second antenna element 120 and the fourth antenna element 140 are both circularly-polarized. Specifically, a first polarization direction of the first antenna element 110 may be substantially z̅, a second polarization direction of the second antenna element 120 may be substantially RHCP (Right Hand Circular Polarization) (e.g., y̅ - j · z̅, where "j" represents an imaginary number, and the corresponding signal may be transmitted in the direction of x̅), a third polarization direction of the third antenna element 130 may be substantially -z̅, and a fourth polarization direction of the fourth antenna element 140 may be substantially LHCP (Left Hand Circular Polarization) (e.g., y̅ + j · z̅, where "j" represents an imaginary number, and the corresponding signal may be transmitted in the direction of x̅). Thus, any two adjacent antenna elements have different types of polarizations, and the interference between them is suppressed.

In some embodiments, the first antenna element 110 and the third antenna element 130 are both circularly-polarized, and the second antenna element 120 and the fourth antenna element 140 are both linearly-polarized. Specifically, a first polarization direction of the first antenna element 110 may be substantially RHCP (e.g., y̅ - j · z̅), a second polarization direction of the second antenna element 120 may be substantially y̅, a third polarization direction of the third antenna element 130 may be substantially LHCP (e.g., y̅ + j · z̅), and a fourth polarization direction of the fourth antenna element 140 may be substantially -y̅. Thus, any two adjacent antenna elements have different types of polarizations, and the interference between them is suppressed.

Generally, any adjacent two of the first antenna element 110, the second antenna element 120, the third antenna element 130, and the fourth antenna element 140 have different polarization directions. According to practical measurements, such a design can effectively enhance the isolation between antenna elements, thereby significantly improving the communication quality of the communication device 100. It should be understood that the aforementioned directions of x-axis, y-axis and z-axis are used to describe the relative relationship between the respective antenna elements. An antenna designer can freely select any direction as the aforementioned x-axis, y-axis or z-axis (it may be reversed), without affecting the performance of the invention.

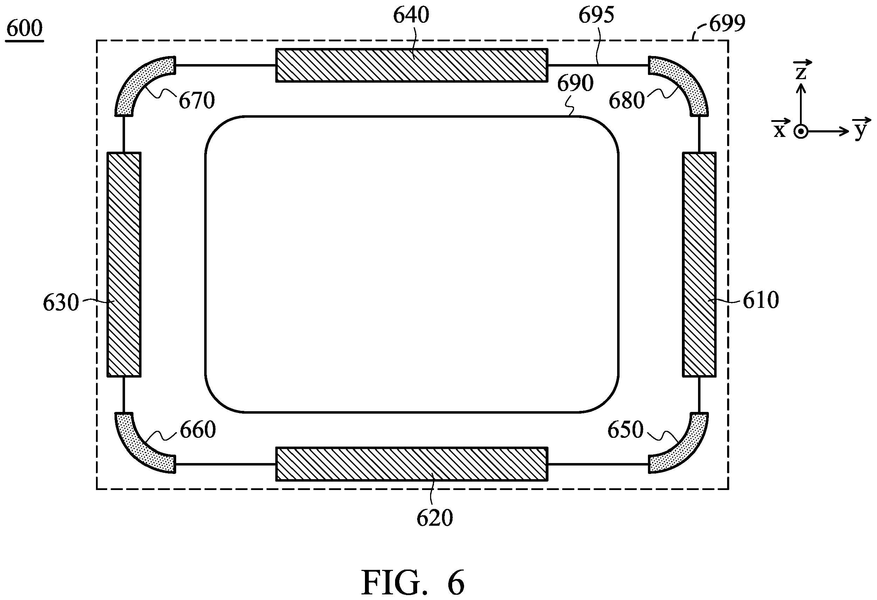

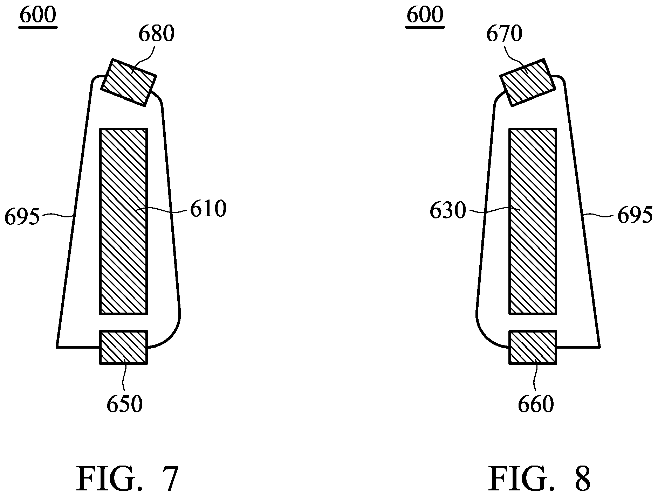

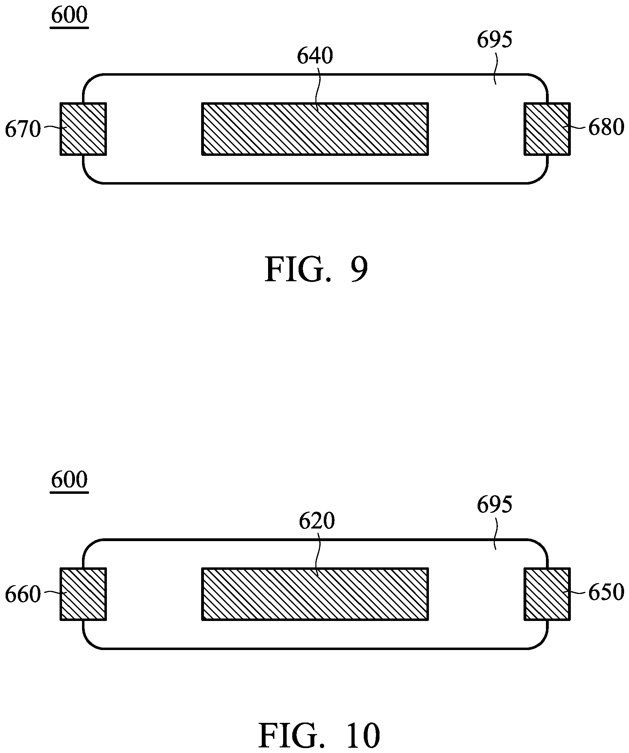

FIG. 6 is a front view of a communication device 600 according to an embodiment of the invention. FIG. 7 is a right view of the communication device 600 according to an embodiment of the invention. FIG. 8 is a left view of the communication device 600 according to an embodiment of the invention. FIG. 9 is a top view of the communication device 600 according to an embodiment of the invention. FIG. 10 is a bottom view of the communication device 600 according to an embodiment of the invention. Please refer to FIGS. 6-10 together. As shown in FIGS. 6-10, the communication device 600 includes a first antenna element 610, a second antenna element 620, a third antenna element 630, a fourth antenna element 640, a fifth antenna element 650, a sixth antenna element 660, a seventh antenna element 670, an eighth antenna element 680, and a display device 690. Specifically, the fifth antenna element 650, the sixth antenna element 660, the seventh antenna element 670, and the eighth antenna element 680 are interleaved with the first antenna element 610, the second antenna element 620, the third antenna element 630, and the fourth antenna element 640.

The shapes and types of the first antenna element 610, the second antenna element 620, the third antenna element 630, the fourth antenna element 640, the fifth antenna element 650, the sixth antenna element 660, the seventh antenna element 670, and the eighth antenna element 680 are not limited in the invention. For example, any of the first antenna element 610, the second antenna element 620, the third antenna element 630, the fourth antenna element 640, the fifth antenna element 650, the sixth antenna element 660, the seventh antenna element 670, and the eighth antenna element 680 may be a monopole antenna, a dipole antenna, a loop antenna, a patch antenna, a helical antenna, a PIFA, or a chip antenna. Furthermore, the first antenna element 610, the second antenna element 620, the third antenna element 630, the fourth antenna element 640, the fifth antenna element 650, the sixth antenna element 660, the seventh antenna element 670, and the eighth antenna element 680 can cover and/or operate in the same frequency band, for example, from 300MHz to 10GHz.

The display device 690 is surrounded by the first antenna element 610, the second antenna element 620, the third antenna element 630, the fourth antenna element 640, the fifth antenna element 650, the sixth antenna element 660, the seventh antenna element 670, and the eighth antenna element 680. In some embodiments, a combination of the first antenna element 610, the second antenna element 620, the third antenna element 630, the fourth antenna element 640, the fifth antenna element 650, the sixth antenna element 660, the seventh antenna element 670, and the eighth antenna element 680 substantially has a second closed-loop shape 699. For example, the second closed-loop shape 699 may be substantially a rectangular shape, a square shape, or a parallelogram, but it is not limited thereto.

In some embodiments, the communication device 600 further includes a housing 695, which is made of a nonconductive material. The display device 690 is embedded in the center of the housing 695. The first antenna element 610, the second antenna element 620, the third antenna element 630, the fourth antenna element 640, the fifth antenna element 650, the sixth antenna element 660, the seventh antenna element 670, and the eighth antenna element 680 may all adhere to the housing 695. For example, the first antenna element 610, the second antenna element 620, the third antenna element 630, the fourth antenna element 640, the fifth antenna element 650, the sixth antenna element 660, the seventh antenna element 670, and the eighth antenna element 680 may all be disposed inside the housing 695. Alternatively, the first antenna element 610, the second antenna element 620, the third antenna element 630, the fourth antenna element 640, the fifth antenna element 650, the sixth antenna element 660, the seventh antenna element 670, and the eighth antenna element 680 may all be disposed outside the housing 695. The two designs can provide similar performance.

In some embodiments according to the invention, the first antenna element 610 is adjacent to the right side of the housing 695, the second antenna element 620 is adjacent to the bottom side of housing 695, the third antenna element 630 is adjacent to the left side of the housing 695, the fourth antenna element 640 is adjacent to the top side of the housing 695, the fifth antenna element 650 is adjacent to the bottom right corner of the housing 695, the sixth antenna element 660 is adjacent to the bottom left corner of housing 695, the seventh antenna element 670 is adjacent to the top left corner of the housing 695, and the eighth antenna element 680 is adjacent to the top right corner of the housing 695.

In some embodiments, the first antenna element 610, the second antenna element 620, the third antenna element 630, the fourth antenna element 640, the fifth antenna element 650, the sixth antenna element 660, the seventh antenna element 670, and the eighth antenna element 680 are all linearly-polarized. Specifically, a first polarization direction of the first antenna element 610 may be substantially z̅, a second polarization direction of the second antenna element 620 may be substantially y̅, a third polarization direction of the third antenna element 630 may be substantially -z̅, and a fourth polarization direction of the fourth antenna element 640 may be substantially -y̅, a fifth polarization direction of the fifth antenna element 650 may be substantially -y̅ - z̅, a sixth polarization direction of the sixth antenna element 660 may be substantially -y̅ + z̅, a seventh polarization direction of the seventh antenna element 670 may be substantially y̅ + z̅, and an eighth polarization direction of the eighth antenna element 680 may be substantially y̅ - z̅. Thus, any two adjacent antenna elements have an angle of 45 or 135 degrees formed between their polarization directions, and the interference between them is suppressed.

In alternative embodiments, the first antenna element 610, the second antenna element 620, the third antenna element 630, the fourth antenna element 640, the seventh antenna element 670, and the eighth antenna element 680 are all linearly-polarized, and the fifth antenna element 650 and the sixth antenna element 660 are both circularly-polarized. Specifically, a first polarization direction of the first antenna element 610 may be substantially z̅, a second polarization direction of the second antenna element 620 may be substantially y̅, a third polarization direction of the third antenna element 630 may be substantially -z̅, and a fourth polarization direction of the fourth antenna element 640 may be substantially -y̅, a fifth polarization direction of the fifth antenna element 650 may be substantially RHCP (e.g., y̅-j·z̅), a sixth polarization direction of the sixth antenna element 660 may be substantially LHCP (e.g., y̅+j·z̅), a seventh polarization direction of the seventh antenna element 670 may be substantially y̅+z̅, and an eighth polarization direction of the eighth antenna element 680 may be substantially y̅-z̅. Thus, any two adjacent antenna elements either have different types of polarization or have an angle of 45 or 135 degrees formed between their polarization directions, and the interference between them is suppressed.

In other embodiments, the first antenna element 610, the second antenna element 620, the third antenna element 630, the fourth antenna element 640, the fifth antenna element 650, and the sixth antenna element 660 are all linearly-polarized, and the seventh antenna element 670 and the eighth antenna element 680 are both circularly-polarized. Specifically, a first polarization direction of the first antenna element 610 may be substantially z̅, a second polarization direction of the second antenna element 620 may be substantially y̅, a third polarization direction of the third antenna element 630 may be substantially -z̅, and a fourth polarization direction of the fourth antenna element 640 may be substantially -y̅, a fifth polarization direction of the fifth antenna element 650 may be substantially y̅+z̅, a sixth polarization direction of the sixth antenna element 660 may be substantially y̅-z̅, a seventh polarization direction of the seventh antenna element 670 may be substantially RHCP (e.g., y̅-j·z̅), and an eighth polarization direction of the eighth antenna element 680 may be substantially LHCP (e.g., y̅ + j · z̅). Thus, any two adjacent antenna elements either have different types of polarization or have an angle of 45 or 135 degrees formed between their polarization directions, and the interference between them is suppressed.

Generally, any adjacent two of the first antenna element 610, the second antenna element 620, the third antenna element 630, the fourth antenna element 640, the fifth antenna element 650, the sixth antenna element 660, the seventh antenna element 670, and the eighth antenna element 680 have different polarization directions. According to practical measurements, such a design can effectively enhance the isolation between antenna elements, thereby significantly improving the communication quality of the communication device 600.

The invention proposed a novel communication device. In comparison to the conventional design, the invention has at least the following advantages of: (1) covering a relatively wide band, (2) providing multiple polarization directions, (3) generating an almost omnidirectional radiation pattern, (4) effectively reducing the whole antenna size, (5) increasing isolation between antenna elements, (6) having a simple structure for mass production, and (7) reducing the whole manufacturing cost. Therefore, the invention is suitable for application in a variety of wireless access points.

Note that the above element sizes, element shapes, and frequency ranges are not limitations of the invention. An antenna designer can fine-tune these settings or values according to different requirements. It should be understood that the communication device of the invention is not limited to the configurations of FIGS. 1-10. The invention may include any one or more features of any one or more embodiments of FIGS. 1-10. In other words, not all of the features displayed in the figures should be implemented in the communication device of the invention.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

It will be apparent to those skilled in the art that various modifications and variations can be made in the invention. It is intended that the standard and examples be considered as exemplary only, with a scope of the disclosed embodiments being indicated by the following claims.

## Claims

1. A communication device, comprising:
a housing (195, 695) made of nonconducting material;
a display device (190, 690) embedded in the housing (195, 695);
a first antenna element (110, 610);
a second antenna element (120, 620);
a third antenna element (130, 630);
a fourth antenna element (140, 640);
a fifth antenna element (650);
a sixth antenna element (660);
a seventh antenna element (670); and
an eighth antenna element (680);
wherein the display device (190, 690) is surrounded by the first antenna element (110, 610), the second antenna element (120, 620), the third antenna element (130, 630), the fourth antenna element (140, 640), the fifth antenna element (650), the sixth antenna element (660), the seventh antenna element (670), and the eighth antenna element (680);
wherein the first antenna element (110, 610) is adjacent to a right side of the housing (195, 695), the second antenna element (120, 620) is adjacent to a bottom side of housing (195, 695), the third antenna element (130, 630) is adjacent to a left side of the housing (195, 695), and the fourth antenna element (140, 640) is adjacent to a top side of the housing (195, 695);
**characterized by** any adjacent two of the first antenna element (110, 610), the second antenna element (120, 620), the third antenna element (130, 630), the fourth antenna element (140, 640), the fifth antenna element (650), the sixth antenna element (660),
the seventh antenna element (670), and the eighth antenna element (680) have different polarization directions in a three dimensional Cartesian coordinate system x, y, z, with x going perpendicular through a display surface of the display device (190, 690); and
wherein the fifth antenna element (650) is adjacent to a bottom right corner of the housing (195, 695), the sixth antenna element (660) is adjacent to a bottom left corner of housing (195, 695), the seventh antenna element (670) is adjacent to a top left corner of the housing (195, 695), and the eighth antenna element (680) is adjacent to a top right corner of the housing (195, 695).

2. The communication device as claimed in claim 1, wherein the first antenna element (110, 610), the second antenna element (120, 620), the third antenna element (130, 630), and the fourth antenna element (140, 640) adhere to the housing (195, 695).

3. The communication device as claimed in claim 1, wherein the first antenna element (110, 610), the second antenna element (120, 620), the third antenna element (130, 630), and the fourth antenna element (140, 640) are linearly-polarized.

4. The communication device as claimed in claim 3, wherein a first polarization direction of the first antenna element (110, 610) is substantially z̅, a second polarization direction of the second antenna element (120, 620) is substantially y̅, a third polarization direction of the third antenna element (130, 630) is substantially -z̅, and a fourth polarization direction of the fourth antenna element (140, 640) is substantially -y̅.

5. The communication device as claimed in claim 1, wherein the first antenna element (110, 610) and the third antenna element (130, 630) are linearly-polarized, and the second antenna element (120, 620) and the fourth antenna element (140, 640) are circularly-polarized.

6. The communication device as claimed in claim 5, wherein a first polarization direction of the first antenna element (110, 610) is substantially z̅, a second polarization direction of the second antenna element (120, 620) is substantially Right Hand Circular Polarization, RHCP, a third polarization direction of the third antenna element (130, 630) is substantially -z̅, and a fourth polarization direction of the fourth antenna element (140, 640) is substantially Left Hand Circular Polarization, LHCP.

7. The communication device as claimed in claim 1, wherein the first antenna element (110, 610) and the third antenna element (130, 630) are circularly-polarized, and the second antenna element (120, 620) and the fourth antenna element (140, 640) are linearly-polarized.

8. The communication device as claimed in claim 7, wherein a first polarization direction of the first antenna element (110, 610) is substantially Right Hand Circular Polarization, RHCP, a second polarization direction of the second antenna element (120, 620) is substantially y̅, a third polarization direction of the third antenna element (130, 630) is substantially Left Hand Circular Polarization, LHCP, and a fourth polarization direction of the fourth antenna element (140, 640) is substantially -y̅.

9. The communication device as claimed in claim 1, wherein a combination of the first antenna element (110, 610), the second antenna element (120, 620), the third antenna element (130, 630), the fourth antenna element (140, 640), the fifth antenna element (650), the sixth antenna element (660), the seventh antenna element (670), and the eighth antenna element (680) substantially has a closed-loop shape.

10. The communication device as claimed in claim 1, wherein the fifth antenna element (650), the sixth antenna element (660), the seventh antenna element (670), and the eighth antenna element (680) adhere to the housing (195, 695).

11. The communication device as claimed in claim 1, wherein the first antenna element (110, 610), the second antenna element (120, 620), the third antenna element (130, 630), the fourth antenna element (140, 640), the fifth antenna element (650), the sixth antenna element (660), the seventh antenna element (670), and the eighth antenna element (680) are linearly-polarized.

12. The communication device as claimed in claim 11, wherein a first polarization direction of the first antenna element (110, 610) is substantially z̅, a second polarization direction of the second antenna element (120, 620) is substantially y̅, a third polarization direction of the third antenna element (130, 630) is substantially -z̅, and a fourth polarization direction of the fourth antenna element (140, 640) is substantially -y̅, a fifth polarization direction of the fifth antenna element (650) is substantially -y̅-z̅, a sixth polarization direction of the sixth antenna element (660) is substantially -y̅-z̅, a seventh polarization direction of the seventh antenna element (670) is substantially y̅ + z̅, and an eighth polarization direction of the eighth antenna element (680) is substantially y̅-z̅.

13. The communication device as claimed in claim 1, wherein the first antenna element (110, 610), the second antenna element (120, 620), the third antenna element (130, 630), the fourth antenna element (140, 640), the seventh antenna element (670), and the eighth antenna element (680) are linearly-polarized, and the fifth antenna element (650) and the sixth antenna element (660) are circularly-polarized.

14. The communication device as claimed in claim 13, wherein a first polarization direction of the first antenna element (110, 610) is substantially z̅, a second polarization direction of the second antenna element (120, 620) is substantially y̅, a third polarization direction of the third antenna element (130, 630) is substantially -z̅, and a fourth polarization direction of the fourth antenna element (140, 640) is substantially -y̅, a fifth polarization direction of the fifth antenna element (650) is substantially Right Hand Circular Polarization, RHCP, a sixth polarization direction of the sixth antenna element (660) is substantially Left Hand Circular Polarization, LHCP, a seventh polarization direction of the seventh antenna element (670) is substantially y̅+z̅, and an eighth polarization direction of the eighth antenna element (680) is substantially y̅-z̅.

## Patentansprüche

1. Eine Kommunikationsvorrichtung, die Folgendes beinhaltet:
ein Gehäuse (195, 695), das aus nichtleitendem Material gefertigt ist;
eine Anzeigevorrichtung (190, 690), die in dem Gehäuse (195, 695) eingebettet ist;
ein erstes Antennenelement (110, 610);
ein zweites Antennenelement (120, 620);
ein drittes Antennenelement (130, 630);
ein viertes Antennenelement (140, 640);
ein fünftes Antennenelement (650);
ein sechstes Antennenelement (660);
ein siebtes Antennenelement (670); und
ein achtes Antennenelement (680);
wobei die Anzeigevorrichtung (190, 690) von dem ersten Antennenelement (110, 610), dem zweiten Antennenelement (120, 620), dem dritten Antennenelement (130, 630), dem vierten Antennenelement (140, 640), dem fünften Antennenelement (650), dem sechsten Antennenelement (660), dem siebten Antennenelement (670) und dem achten Antennenelement (680) umgeben ist;
wobei das erste Antennenelement (110, 610) einer rechten Seite des Gehäuses (195, 695) benachbart ist, das zweite Antennenelement (120, 620) einer unteren Seite des Gehäuses (195, 695) benachbart ist, das dritte Antennenelement (130, 630) einer linken Seite des Gehäuses (195, 695) benachbart ist und das vierte Antennenelement (140, 640) einer oberen Seite des Gehäuses (195, 695) benachbart ist;
**dadurch gekennzeichnet, dass** beliebige benachbarte zwei von dem ersten Antennenelement (110, 610), dem zweiten Antennenelement (120, 620), dem dritten Antennenelement (130, 630), dem vierten Antennenelement (140, 640), dem fünften Antennenelement (650), dem sechsten Antennenelement (660), dem siebten Antennenelement (670) und dem achten Antennenelement (680) in einem dreidimensionalen kartesischen x-y-z-Koordinatensystem unterschiedliche Polarisationsrichtungen aufweisen, wobei x senkrecht durch eine Anzeigeoberfläche der Anzeigevorrichtung (190, 690) verläuft; und
wobei das fünfte Antennenelement (650) einer unteren rechten Ecke des Gehäuses (195, 695) benachbart ist, das sechste Antennenelement (660) einer unteren linken Ecke des Gehäuses (195, 695) benachbart ist, das siebte Antennenelement (670) einer oberen linken Ecke des Gehäuses (195, 695) benachbart ist und das achte Antennenelement (680) einer oberen rechten Ecke des Gehäuses (195, 695) benachbart ist.

2. Kommunikationsvorrichtung gemäß Anspruch 1, wobei das erste Antennenelement (110, 610), das zweite Antennenelement (120, 620), das dritte Antennenelement (130, 630) und das vierte Antennenelement (140, 640) an dem Gehäuse (195, 695) haften.

3. Kommunikationsvorrichtung gemäß Anspruch 1, wobei das erste Antennenelement (110, 610), das zweite Antennenelement (120, 620), das dritte Antennenelement (130, 630) und das vierte Antennenelement (140, 640) linear polarisiert sind.

4. Kommunikationsvorrichtung gemäß Anspruch 3, wobei eine erste Polarisationsrichtung des ersten Antennenelements (110, 610) im Wesentlichen z̅ ist, eine zweite Polarisationsrichtung des zweiten Antennenelements (120, 620) im Wesentlichen y̅ ist, eine dritte Polarisationsrichtung des dritten Antennenelements (130, 630) im Wesentlichen -z̅ ist und eine vierte Polarisationsrichtung des vierten Antennenelements (140, 640) im Wesentlichen -y̅ ist.

5. Kommunikationsvorrichtung gemäß Anspruch 1, wobei das erste Antennenelement (110, 610) und das dritte Antennenelement (130, 630) linear polarisiert sind und das zweite Antennenelement (120, 620) und das vierte Antennenelement (140, 640) zirkular polarisiert sind.

6. Kommunikationsvorrichtung gemäß Anspruch 5, wobei eine erste Polarisationsrichtung des ersten Antennenelements (110, 610) im Wesentlichen z̅ ist, eine zweite Polarisationsrichtung des zweiten Antennenelements (120, 620) im Wesentlichen rechtsdrehende zirkulare Polarisation, RHCP, ist, eine dritte Polarisationsrichtung des dritten Antennenelements (130, 630) im Wesentlichen -z̅ ist und eine vierte Polarisationsrichtung des vierten Antennenelements (140, 640) im Wesentlichen linksdrehende zirkulare Polarisation, LHCP, ist.

7. Kommunikationsvorrichtung gemäß Anspruch 1, wobei das erste Antennenelement (110, 610) und das dritte Antennenelement (130, 630) zirkular polarisiert sind und das zweite Antennenelement (120, 620) und das vierte Antennenelement (140, 640) linear polarisiert sind.

8. Kommunikationsvorrichtung gemäß Anspruch 7, wobei eine erste Polarisationsrichtung des ersten Antennenelements (110, 610) im Wesentlichen rechtsdrehende zirkulare Polarisation, RHCP, ist, eine zweite Polarisationsrichtung des zweiten Antennenelements (120, 620) im Wesentlichen y̅ ist, eine dritte Polarisationsrichtung des dritten Antennenelements (130, 630) im Wesentlichen linksdrehende zirkulare Polarisation, LHCP, ist und eine vierte Polarisationsrichtung des vierten Antennenelements (140, 640) im Wesentlichen -y̅ ist.

9. Kommunikationsvorrichtung gemäß Anspruch 1, wobei eine Kombination von dem ersten Antennenelement (110, 610), dem zweiten Antennenelement (120, 620), dem dritten Antennenelement (130, 630), dem vierten Antennenelement (140, 640), dem fünften Antennenelement (650), dem sechsten Antennenelement (660), dem siebten Antennenelement (670) und dem achten Antennenelement (680) im Wesentlichen eine Form einer geschlossenen Schleife aufweist.

10. Kommunikationsvorrichtung gemäß Anspruch 1, wobei das fünfte Antennenelement (650), das sechste Antennenelement (660), das siebte Antennenelement (670) und das achte Antennenelement (680) an dem Gehäuse (195, 695) haften.

11. Kommunikationsvorrichtung gemäß Anspruch 1, wobei das erste Antennenelement (110, 610), das zweite Antennenelement (120, 620), das dritte Antennenelement (130, 630), das vierte Antennenelement (140, 640), das fünfte Antennenelement (650), das sechste Antennenelement (660), das siebte Antennenelement (670) und das achte Antennenelement (680) linear polarisiert sind.

12. Kommunikationsvorrichtung gemäß Anspruch 11, wobei eine erste Polarisationsrichtung des ersten Antennenelements (110, 610) im Wesentlichen z̅ ist, eine zweite Polarisationsrichtung des zweiten Antennenelements (120, 620) im Wesentlichen y̅ ist, eine dritte Polarisationsrichtung des dritten Antennenelements (130, 630) im Wesentlichen -z̅ ist und eine vierte Polarisationsrichtung des vierten Antennenelements (140, 640) im Wesentlichen -y̅ ist, eine fünfte Polarisationsrichtung des fünften Antennenelements (650) im Wesentlichen -y̅-z̅ ist, eine sechste Polarisationsrichtung des sechsten Antennenelements (660) im Wesentlichen -y̅+z̅ ist, eine siebte Polarisationsrichtung des siebten Antennenelements (670) im Wesentlichen y̅+z̅ ist und eine achte Polarisationsrichtung des achten Antennenelements (680) im Wesentlichen y̅-z̅ ist.

13. Kommunikationsvorrichtung gemäß Anspruch 1, wobei das erste Antennenelement (110, 610), das zweite Antennenelement (120, 620), das dritte Antennenelement (130, 630), das vierte Antennenelement (140, 640), das siebte Antennenelement (670) und das achte Antennenelement (680) linear polarisiert sind und das fünfte Antennenelement (650) und das sechste Antennenelement (660) zirkular polarisiert sind.

14. Kommunikationsvorrichtung gemäß Anspruch 13, wobei eine erste Polarisationsrichtung des ersten Antennenelements (110, 610) im Wesentlichen z̅ ist, eine zweite Polarisationsrichtung des zweiten Antennenelements (120, 620) im Wesentlichen y̅ ist, eine dritte Polarisationsrichtung des dritten Antennenelements (130, 630) im Wesentlichen -z̅ ist und eine vierte Polarisationsrichtung des vierten Antennenelements (140, 640) im Wesentlichen -y̅ ist, eine fünfte Polarisationsrichtung des fünften Antennenelements (650) im Wesentlichen rechtsdrehende zirkulare Polarisation, RHCP, ist, eine sechste Polarisationsrichtung des sechsten Antennenelements (660) im Wesentlichen linksdrehende zirkulare Polarisation, LHCP, ist, eine siebte Polarisationsrichtung des siebten Antennenelements (670) im Wesentlichen y̅+z̅ ist und eine achte Polarisationsrichtung des achten Antennenelements (680) im Wesentlichen y̅-z̅ ist.

## Revendications

1. Un dispositif de communication, comprenant :
un boîtier (195, 695) réalisé en un matériau non conducteur ;
un dispositif d'affichage (190, 690) incorporé dans le boîtier (195, 695) ;
un premier élément formant antenne (110, 610) ;
un deuxième élément formant antenne (120, 620) ;
un troisième élément formant antenne (130, 630) ;
un quatrième élément formant antenne (140, 640) ;
un cinquième élément formant antenne (650) ;
un sixième élément formant antenne (660) ;
un septième élément formant antenne (670) ; et
un huitième élément formant antenne (680) ;
où le dispositif d'affichage (190, 690) est entouré par le premier élément formant antenne (110, 610), le deuxième élément formant antenne (120, 620), le troisième élément formant antenne (130, 630), le quatrième élément formant antenne (140, 640), le cinquième élément formant antenne (650), le sixième élément formant antenne (660), le septième élément formant antenne (670), et le huitième élément formant antenne (680) ;
où le premier élément formant antenne (110, 610) est adjacent à un côté droit du boîtier (195, 695), le deuxième élément formant antenne (120, 620) est adjacent à un côté inférieur du boîtier (195, 695), le troisième élément formant antenne (130, 630) est adjacent à un côté gauche du boîtier (195, 695), et le quatrième élément formant antenne (140, 640) est adjacent à un côté supérieur du boîtier (195, 695) ;
**caractérisé par le fait que** deux éléments adjacents quelconques parmi le premier élément formant antenne (110, 610), le deuxième élément formant antenne (120, 620),
le troisième élément formant antenne (130, 630), le quatrième élément formant antenne (140, 640), le cinquième élément formant antenne (650), le sixième élément formant antenne (660), le septième élément formant antenne (670), et le huitième élément formant antenne (680) ont des directions de polarisation différentes dans un système de coordonnées cartésiennes en trois dimensions x, y, z, avec x passant perpendiculairement par une surface d'affichage du dispositif d'affichage (190, 690) ; et
où le cinquième élément formant antenne (650) est adjacent à un coin inférieur droit du boîtier (195, 695), le sixième élément formant antenne (660) est adjacent à un coin inférieur gauche du boîtier (195, 695), le septième élément formant antenne (670) est adjacent à un coin supérieur gauche du boîtier (195, 695), et le huitième élément formant antenne (680) est adjacent à un coin supérieur droit du boîtier (195, 695).

2. Le dispositif de communication tel que revendiqué dans la revendication 1, où le premier élément formant antenne (110, 610), le deuxième élément formant antenne (120, 620), le troisième élément formant antenne (130, 630), et le quatrième élément formant antenne (140, 640) adhèrent au boîtier (195, 695).

3. Le dispositif de communication tel que revendiqué dans la revendication 1, où le premier élément formant antenne (110, 610), le deuxième élément formant antenne (120, 620), le troisième élément formant antenne (130, 630), et le quatrième élément formant antenne (140, 640) sont polarisés linéairement.

4. Le dispositif de communication tel que revendiqué dans la revendication 3, où une première direction de polarisation du premier élément formant antenne (110, 610) est substantiellement z̅, une deuxième direction de polarisation du deuxième élément formant antenne (120, 620) est substantiellement y̅, une troisième direction de polarisation du troisième élément formant antenne (130, 630) est substantiellement -z̅, et une quatrième direction de polarisation du quatrième élément formant antenne (140, 640) est substantiellement -y̅.

5. Le dispositif de communication tel que revendiqué dans la revendication 1, où le premier élément formant antenne (110, 610) et le troisième élément formant antenne (130, 630) sont polarisés linéairement, et le deuxième élément formant antenne (120, 620) et le quatrième élément formant antenne (140, 640) sont polarisés circulairement.

6. Le dispositif de communication tel que revendiqué dans la revendication 5, où une première direction de polarisation du premier élément formant antenne (110, 610) est substantiellement z̅, une deuxième direction de polarisation du deuxième élément formant antenne (120, 620) est substantiellement une polarisation circulaire droite, RHCP *(Right Hand Circular Polarization*), une troisième direction de polarisation du troisième élément formant antenne (130, 630) est substantiellement -z̅, et une quatrième direction de polarisation du quatrième élément formant antenne (140, 640) est substantiellement une polarisation circulaire gauche, LHCP (*Left Hand Circular Polarization*).

7. Le dispositif de communication tel que revendiqué dans la revendication 1, où le premier élément formant antenne (110, 610) et le troisième élément formant antenne (130, 630) sont polarisés circulairement, et le deuxième élément formant antenne (120, 620) et le quatrième élément formant antenne (140, 640) sont polarisés linéairement.

8. Le dispositif de communication tel que revendiqué dans la revendication 7, où une première direction de polarisation du premier élément formant antenne (110, 610) est substantiellement une polarisation circulaire droite, RHCP, une deuxième direction de polarisation du deuxième élément formant antenne (120, 620) est substantiellement y̅, une troisième direction de polarisation du troisième élément formant antenne (130, 630) est substantiellement une polarisation circulaire gauche, LHCP, et une quatrième direction de polarisation du quatrième élément formant antenne (140, 640) est substantiellement -y̅.

9. Le dispositif de communication tel que revendiqué dans la revendication 1, où une combinaison du premier élément formant antenne (110, 610), du deuxième élément formant antenne (120, 620), du troisième élément formant antenne (130, 630), du quatrième élément formant antenne (140, 640), du cinquième élément formant antenne (650), du sixième élément formant antenne (660), du septième élément formant antenne (670), et du huitième élément formant antenne (680) a substantiellement la forme d'une boucle fermée.

10. Le dispositif de communication tel que revendiqué dans la revendication 1, où le cinquième élément formant antenne (650), le sixième élément formant antenne (660), le septième élément formant antenne (670), et le huitième élément formant antenne (680) adhèrent au boîtier (195, 695).

11. Le dispositif de communication tel que revendiqué dans la revendication 1, où le premier élément formant antenne (110, 610), le deuxième élément formant antenne (120, 620), le troisième élément formant antenne (130, 630), le quatrième élément formant antenne (140, 640), le cinquième élément formant antenne (650), le sixième élément formant antenne (660), le septième élément formant antenne (670), et le huitième élément formant antenne (680) sont polarisés linéairement.

12. Le dispositif de communication tel que revendiqué dans la revendication 11, où une première direction de polarisation du premier élément formant antenne (110, 610) est substantiellement z̅, une deuxième direction de polarisation du deuxième élément formant antenne (120, 620) est substantiellement y̅, une troisième direction de polarisation du troisième élément formant antenne (130, 630) est substantiellement -z̅, et une quatrième direction de polarisation du quatrième élément formant antenne (140, 640) est substantiellement -y̅, une cinquième direction de polarisation du cinquième élément formant antenne (650) est substantiellement -y̅-z̅, une sixième direction de polarisation du sixième élément formant antenne (660) est substantiellement -y̅+z̅, une septième direction de polarisation du septième élément formant antenne (670) est substantiellement y̅+z̅, et une huitième direction de polarisation du huitième élément formant antenne (680) est substantiellement y̅-z̅.

13. Le dispositif de communication tel que revendiqué dans la revendication 1, où le premier élément formant antenne (110, 610), le deuxième élément formant antenne (120, 620), le troisième élément formant antenne (130, 630), le quatrième élément formant antenne (140, 640), le septième élément formant antenne (670), et le huitième élément formant antenne (680) sont polarisés linéairement, et le cinquième élément formant antenne (650) et le sixième élément formant antenne (660) sont polarisés circulairement.

14. Le dispositif de communication tel que revendiqué dans la revendication 13, où une première direction de polarisation du premier élément formant antenne (110, 610) est substantiellement z̅, une deuxième direction de polarisation du deuxième élément formant antenne (120, 620) est substantiellement y̅, une troisième direction de polarisation du troisième élément formant antenne (130, 630) est substantiellement -z̅. et une quatrième direction de polarisation du quatrième élément formant antenne (140, 640) est substantiellement -y̅, une cinquième direction de polarisation du cinquième élément formant antenne (650) est substantiellement une polarisation circulaire droite, RHCP, une sixième direction de polarisation du sixième élément formant antenne (660) est substantiellement une polarisation circulaire gauche, LHCP, une septième direction de polarisation du septième élément formant antenne (670) est substantiellement y̅+z̅, et une huitième direction de polarisation du huitième élément formant antenne (680) est substantiellement y̅-z̅.
